# EUROPEAN PATENT APPLICATION

(11) **EP 1 026 233 A2**
(43) Date of publication of application: **09.08.2000**
(21) Application number: 00200271.5
(22) Date of filing: 26.01.2000
(51) Int. Cl.: C12G 1/032

(54) **Fermentation tank with device for recirculation of the must**

(30) Priority: 29.01.1999 IT TV990014
(71) Applicant: VELO Spa, I-31030 Altivole, Treviso (IT)
(72) Inventor: Velo, Antonio, 31030 Caerano San Marco, Treviso (IT)
(74) Representative: Dragotti, Gianfranco

(57) **Abstract**

The invention relates to a fermenter for must, comprising a tank (2) and means (5, 6, 7, 9) for repassing the must, which include a device (9) for distributing, from above, the tapped must inside the tank, provided with a rotor (12) which is rotatable with respect to a substantially vertical axis and from which one or more jets of must emerge, diverging from this axis, and strike against a respective opposing surface (14) fixed to the rotor, whereby being dispersed inside the tank.

## Description

The invention relates to fermenters for musts, namely those special tanks inside which the pressed grapes are left to macerate in the must obtained from them.

This type of treatment is usually used for the production of red wines: it is indeed, because of maceration of the skins (also called marc) of the grapes in the must that the substances necessary for colouring thereof are released.

Experts in the sector also refer to the fermenters by different names, such as macerators, fermenting tuns, vinification vats, etc.; in this description and in the accompanying claims, for the sake of simplicity, only the term "fermenter" will be used, without implying any limitation thereby.

The known fermenters consist essentially of a tank made of stainless steel or other suitable material, which contains the must wherein the marc floats, forming the so-called "cap"; in order to favour remixing of the must with the marc and thus to obtain uniform distribution of the substances released therein by the grape skins, it is a widespread practice to tap the liquid from the bottom of the tank and pump it towards the top part thereof, from where it is then poured from above onto the cap formed by the marc.

This operation is reffered to as "repassing" of the must.

It has been noted that the removal and the subsequent reintroduction of the must into the tank, as they are performed nowadays, do not produce entirely satisfactory results for the purposes of improved distribution of the substances mentioned previously and of aeration of the must.

The object of the present invention is therefore that of remedying this situation; in other words this invention aims at providing a fermenter in which there is an improved contact between the marc and the must during repassing of the latter.

This object is achieved by a fermenter whose characterising features are set out in the claims which will follow.

These features and the advantages arising therefrom will be understood more clearly from the description which follows, relating to a non-limiting and exemplary embodiment of the invention shown in the accompanying drawings, wherein:

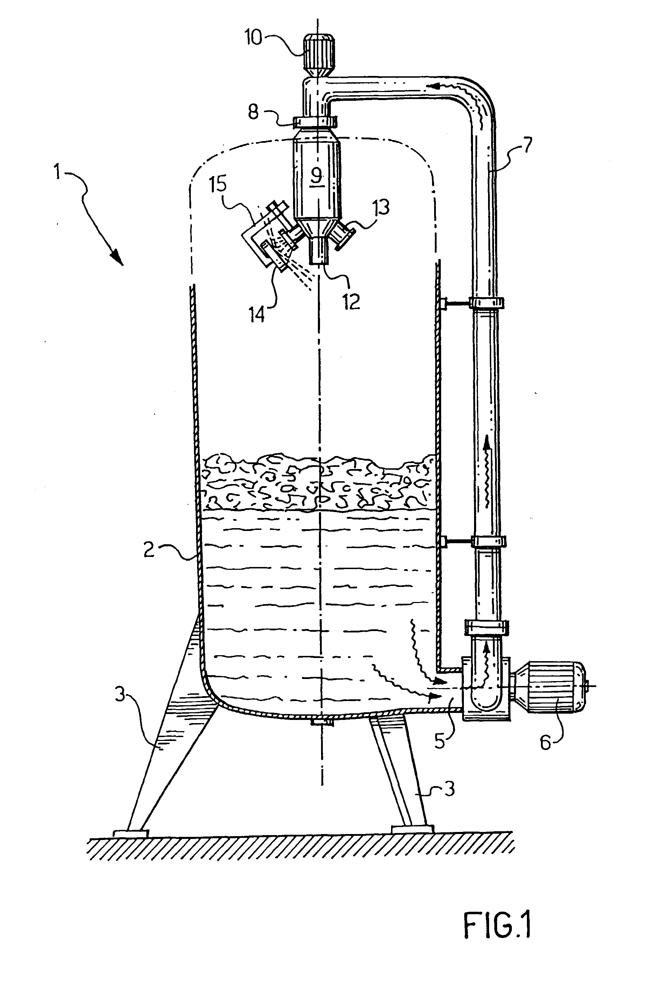

- Fig. 1 shows a cross-sectional view of a fermenter according to the invention;
- Figures 2 and 3 show a view, on a larger scale, of respective details of the fermenter in to Fig. 1.

In the drawings 1 denotes in its entirety the fermenter according to the invention, which comprises a cylindrical tank 2 (the top part of which is shown simply as a broken line for convenience) provided with support legs 3 and arranged with its axis vertical.

At the bottom the tank 2 has a nipple 5 onto which a pump 6 is mounted, the delivery of said pump being connected to a pipe 7 for recirculating the must towards the top of the tank.

The end of the pipe 7 has fitted to it, by means of a flanged joint 8, a device 9 for distributing the must over the marc contained inside the tank; this device is operated by a motor 10 mounted on the same end of the pipe 7.

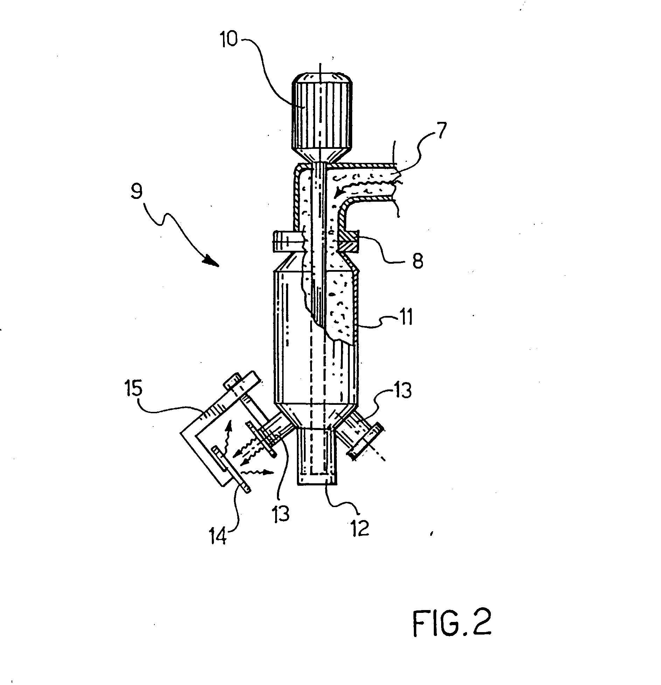

The device 9 consists of a fixed casing 11 which is rigidly connected to the pipe 7 by means of the joint 8, and a rotor 12 with a tapered shape which defines one end of the casing; the rotor 12 is mounted on the output shaft of the motor 10 which, as can be seen from Figure 2, extends axially along the whole device 9, passing through the end part of the pipe 7 and the casing 11.

The rotor 12 is provided with one or more nozzles 13 (in the example in question there are two of said nozzles, one of which is not operative because it is closed by a lid) from where the tapped must flows onto the bottom of the tank in the manner which will be explained more clearly below.

A disc or plate 14 is arranged opposite one of these nozzles (i.e. the operating nozzle) at a distance which is adjustable by means of a guide 15.

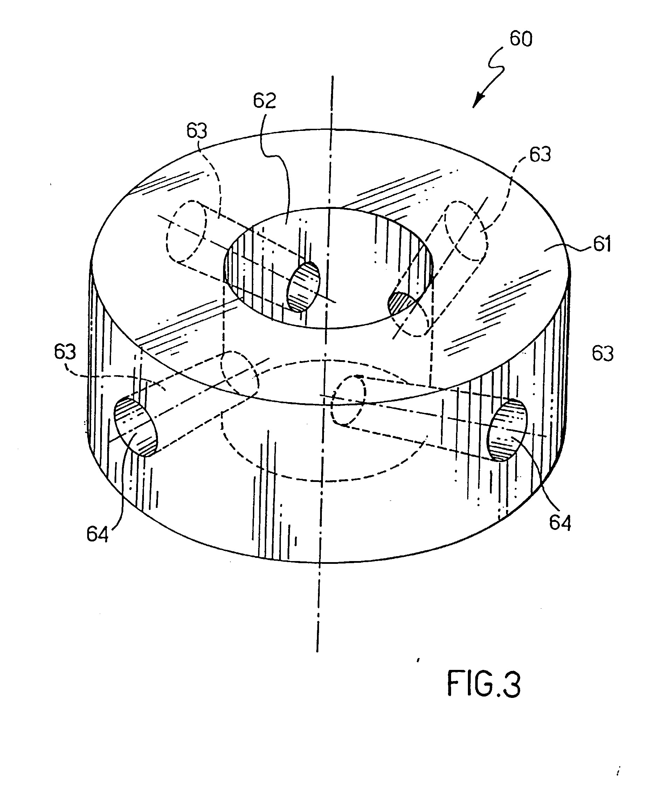

In accordance with a preferred embodiment of the invention the pump 6 is of the centrifugal type and is provided with an impeller 60 which is shown in detail in Figure 3; this impeller consists of a cylindrical drum 61 is provided internally with an axial cavity 62 from where diverging ducts 63 extend, said ducts being formed in the body of the drum and terminating on the external surface thereof with openings 64.

The operation of the fermenter described above is as follows.

The pump 6 draws from the bottom of the tank 2 the must on which the marc floats; more particularly, during this stage, the liquid emerges from the nipple 5 and enters into the axial cavity 62 of the impeller 60, rotation whose and consequent flowing inside the ducts 63 convey said liquid towards the pipe 7.

The flow of must is then fed by the pump 6 to the top end of the pipe 7, from where it enters into the distribution device 9; during this stage the rotor 12 of the device is made to rotate by the motor 10 and the must emerges from the nozzle 13 (on the left-hand side in the figures) at a predefined pressure. It should be pointed out that suitable sealing means are provided between the moving rotor 12 and the fixed casing 11 in order to prevent leakage of the must.

A jet emerges from the nozzle in the direction of the disc 14 which disperses said jet inside the tank, spreading it on top of the marc, in a manner similar to that which occurs for the water sprayed onto land in some field irrigation systems; furthermore, the must also splashes against the internal wall of the tank and flows along it so as to reach also the most peripheral zones of the floating mass.

The movement of the rotor 12 further ensures that the distribution device 9 has a uniform action over the whole cross-section of the tank.

From the above description it is therefore possible to appreciate how the invention achieves the object set out the beginning.

Indeed, as we have seen the device 9 is able to distribute the must uniformly over the whole marc, thereby ensuring optimum contact between each other and the possibility of improved mixing of the substances released by the grape skins in the liquid mass.

At the same time the distribution of the must performed by the disc which is struck by the jet emerging from the nozzles ensures optimum aeration of the must during repassing.

It is also important to emphasise the operational flexibility of the distribution device according to the invention, as a result of which said device is easily adjustable and hence suitable for tanks with forms and/or dimensions different from that shown in the drawings.

In fact, should it be desired to distribute a larger flow of must, it is possible to use several nozzles 13 together with the associated disc 14 for dispersion of the jet; in this connection it hardly needs to be mentioned that it is possible for the distribution device to have rotors with more than two nozzles as in the case of the rotor considered in the example above.

Furthermore, by adjusting the distance of each disc from the corresponding associated nozzle it is possible to obtain a diffusion of the must which is atomised to a greater or lesser degree, in accordance with requirements.

Another possibility for adjustment of the device according to this invention is provided by the variation in speed of rotor 12, an increase or decrease of which makes possible to change the conditions for distribution of the must over the marc.

A further aspect which needs to be mentioned here is the advantageous effects achieved by the particular impeller of the pump for repassing the must.

This impeller has in fact been designed to prevent impact with any skins or grape pips which may cause fragmentation of the latter; indeed, it is known that if the skins or grape pips are broken up, as may occur for example with traditional pumps, when they come into contact with their impellers, they release substances which alter the taste of the must in an undesirable manner.

For this reason the impeller 60 has been designed so as not to have sharp edges (such as, for example, the edges of the blades of certain helical propellers) or other parts which may cut or break up any solid bodies present in the flow of must tapped from the tank.

As may be understood by observing the shape of the abovementioned impeller, during operation of the pump, these bodies (whether they are skins, pips or other bodies) enter into the axial cavity 62 where, since the latter is bounded by a cylindrical wall, there are no impacts which are likely to damage said bodies.

The bodies then pass into the ducts 63 where they are then expelled by the pump into the pipe 7; in this case, also, the contact with the walls of the ducts 63 is not such as to produce negative consequences since basically said ducts guide the skins or the pips towards the pipe 7.

Obviously, the abovementioned ducts may be shaped in the manner which is most appropriate for increasing the performance of the pump and therefore it is also possible that they might have a configuration different from that shown in the drawings; these and other further variations of the invention nevertheless fall within the scope of the claims which follow.

## Claims

1. Fermenter for must, comprising a tank (2) and means (5, 6, 7, 9) for repassing the must, characterized in that these repassing means include a device (9) for distributing, from above, the tapped must inside the tank, provided with a rotor (12) which is rotatable with respect to a substantially vertical axis and from which one or more jets of must emerge, diverging from this axis and striking against a respective opposed surface (14) fixed to the rotor, thereby being dispersed inside the tank.

2. Fermenter according to Claim 1, wherein the opposed surface (14) is adjustable with regard to its distance from the rotor (12).

3. Fermenter according to Claims 1 and 2, wherein the rotor (12) is operated with an adjustable speed of rotation by a motor (10).

4. Fermenter according to any one of the preceding claims, wherein the repassing means comprise a pump (6) for supplying the must tapped from the bottom of the tank (2) towards the distribution device (9), provided with an impeller (60) consisting of a cylindrical drum (61) with an axial cavity (62), inside which a plurality of ducts (63) extending between this cavity and the external surface of the drum are arranged.
